# EUROPÄISCHE PATENTSCHRIFT

(11) **EP 3 926 776 B1**
(45) Veröffentlichungstag und Bekanntmachung des Hinweises auf die Patenterteilung: **24.07.2024**
(21) Anmeldenummer: 21174772.0
(22) Anmeldetag: 19.05.2021
(51) Int. Cl.: H02H 5/12

(54) **SPANNUNGSWARNER, SPANNUNGSWARNSYSTEM SOWIE ELEKTRISCHE ANLAGE**
VOLTAGE WARNING DEVICE, VOLTAGE WARNING SYSTEM AND ELECTRICAL INSTALLATION
AVERTISSEUR DE TENSION, SYSTÈME D'AVERTISSEMENT DE TENSION ET INSTALLATION ÉLECTRIQUE

(30) Priorität: 27.05.2020 DE 102020114216
(43) Veröffentlichungstag der Anmeldung: 22.12.2021
(73) Patentinhaber: Westnetz GmbH, 44139 Dortmund (DE)
(72) Erfinder: Ratering-Schnitzler, Berthold, 46282 Dorsten (DE)
(74) Vertreter: Bals & Vogel Patentanwälte PartGmbB

(56) Entgegenhaltungen:
- WO-A1-2019/243381
- CN-U- 204 856 822
- CN-U- 205 788 736

## Beschreibung

Die vorliegende Erfindung betrifft einen Spannungswarner für ein elektrisches Anlagenteil einer elektrischen Anlage oder für eine elektrische Anlage, ein Spannungswarnsystem zum Warnen eines Facharbeiters vor einer Spannung, die an einem elektrischen Anlagenteil einer elektrischen Anlage oder an einer elektrischen Anlage anliegt, wobei das Spannungswarnsystem den Spannungswarner aufweist, sowie eine elektrische Anlage mit einem elektrischen Anlagenteil und dem Spannungswarnsystem.

Ein solches System ist zum Beispiel offenbart im Dokument CN 204 856 822 U.

Bei Wartungs- oder Reparaturarbeiten an oder in der Nähe von elektrischen Anlagenteilen einer elektrischen Anlage der Mittelspannung und Hochspannung ist das jeweilige elektrische Anlagenteil bzw. die elektrische Anlage vor Beginn der Arbeiten zur Sicherheit des mit den Wartungsarbeiten beauftragten Facharbeiters spannungsfrei zu schalten.

Hierbei können verschiedene Sicherheitsvorgaben und -regeln zu beachten sein. In Deutschland findet die DIN VDE 0105-100:2015-10 Anwendung, die insgesamt fünf Sicherheitsregeln für das Spannungsfreischalten des elektrischen Anlagenteils vorsieht. Die Sicherheit des Facharbeiters hängt damit unmittelbar mit der Durchführung der fünf Sicherheitsregeln durch ihn selbst zusammen.

Trotz derartiger Sicherheitsregeln zur Spannungsfreischaltung der elektrischen Anlagenteile vor dem Beginn der Arbeiten an diesen kann es zur lebensbedrohlichen Gefährdung der Facharbeiter beim Durchführen der Facharbeiten kommen. Dies kann beispielsweise bei einer Arbeitsplatzverwechslung vorkommen, bei der der Facharbeiter unbewusst in eine Gefahrenzone eines unter Spannung stehenden elektrischen Anlagenteils gelangt.

Auch kann es infolge einer Unterbrechung der Arbeitstätigkeit des Facharbeiters bei der Spannungsfreischaltung des elektrischen Anlagenteils, insbesondere bei einer Unterbrechung bei der Abfolge gemäß den fünf Sicherheitsregeln, dazu kommen, dass das elektrische Anlagenteil entgegen der Erwartung des Facharbeiters nicht spannungsfrei geschaltet wird.

Aufgabe der Erfindung ist es, das Risiko einer lebensbedrohlichen Gefährdung für einen Facharbeiter bei der Durchführung von Arbeiten an elektrischen Anlagenteilen einer elektrischen Anlage mit einfachen und kostengünstigen Mitteln zu reduzieren.

Die voranstehende Aufgabe wird durch die Gegenstände der Patentansprüche, insbesondere durch einen Spannungswarner nach Anspruch 1, ein Spannungswarnsystem nach Anspruch 9 sowie eine elektrische Anlage nach Anspruch 14 oder 15, gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Spannungswarner offenbart sind, selbstverständlich auch im Zusammenhang mit dem erfindungsgemäßen Spannungswarnsystem und der elektrischen Anlage sowie jeweils umgekehrt, sodass bezüglich der Offenbarung zu den einzelnen Erfindungsaspekten stets wechselseitig Bezug genommen wird beziehungsweise werden kann.

Gemäß einem ersten Aspekt löst die Erfindung die Aufgabe durch einen Spannungswarner für ein elektrisches Anlagenteil einer elektrischen Anlage oder eine elektrische Anlage mit: einem elektrischen Bauelement, das dazu eingerichtet ist, elektrisch mit einem aktiven Teil des elektrischen Anlagenteils oder der elektrischen Anlage verbunden zu werden und eine an dem aktiven Teil anliegende Spannung abzugreifen, und einer ersten drahtlosen Signaleinheit, die elektrisch mit dem elektrischen Bauelement verbunden und derart eingerichtet ist, dass die erste drahtlose Signaleinheit ein Warnsignal in ein Umfeld um die erste drahtlose Signaleinheit aussendet, wenn das elektrische Bauelement eine Spannung von dem aktiven Teil abgreift, sodass das Warnsignal von einer in dem Umfeld befindlichen zweiten drahtlosen Signaleinheit empfangen werden kann.

Demgemäß wird vorgesehen, dass der Spannungswarner ein Warnsignal aussendet, wenn eine Spannung an dem aktiven Teil des elektrischen Anlagenteils oder der elektrischen Anlage anliegt, die von dem elektrischen Bauelement abgegriffen wird. Das Warnsignal ist von der zweiten drahtlosen Signaleinheit empfangbar und kann den Facharbeiter bei Empfang des Warnsignals entsprechend warnen. Wie die Warnung des Facharbeiters erfolgen kann, wird später näher beschrieben.

Die elektrischen Anlagen und elektrischen Anlagenteile gemäß der Erfindung können insbesondere solcher der Mittelspannung ab 10 kV und der Hochspannung ab 110 kV sein und im Bereich der Stromerzeugung, Stromverteilung, Stromversorgung usw. eines Energieversorgers Anwendung finden. Die elektrischen Anlagen und elektrischen Anlagenteile können insoweit auch als elektrische Energieanlagen und elektrische Energieanlagenteile bezeichnet werden. Die elektrischen Anlagen und elektrischen Anlagenteile können insbesondere stationär sein. Die elektrischen Anlagen und elektrischen Anlagenteile können beispielsweise Transformatoren, elektrische Verteiler, Schaltschränke usw. sein.

Als elektrisches Anlagenteil wird eine Subeinheit der elektrischen Anlage verstanden, die insoweit eine übergeordnete Einheit darstellt und mehrere Subeinheiten bzw. elektrischen Anlagenteile aufweisen kann. Insoweit muss nicht die gesamte elektrische Anlage spannungsfrei geschaltet werden, um Arbeiten an der elektrischen Anlage durchzuführen, sondern es können jeweils nur die elektrischen Anlagenteile spannungsfrei geschaltet werden, an denen die Arbeiten durchgeführt werden sollen.

Als aktives Teil wird ein elektrisch leitfähiges Teil der elektrischen Anlage oder des elektrischen Anlagenteils verstanden, welches im normalen Betrieb der elektrischen Anlage oder des elektrischen Anlagenteils unter Spannung steht. An dem aktiven Teil des elektrischen Anlagenteils oder der elektrischen Anlage kann demgemäß mittels des Spannungswarners einfach geprüft werden, ob an der gesamten elektrischen Anlage oder dem elektrischen Anlagenteil eine Spannung anliegt. Das aktive Teil kann beispielsweise eine Sammelschiene sein. Das aktive Teil kann lackiert sein, sollte aber nicht isoliert sein.

Es kann vorgesehen sein, dass die erste drahtlose Signaleinheit ein Warnsignal dann und solange in das Umfeld aussendet, wie das elektrische Bauelement eine Spannung von dem aktiven Teil abgreift. Entsprechend kann vorgesehen sein, dass das elektrische Bauelement die erste drahtlose Signaleinheit mit Energie versorgt. Solange also an dem aktiven Teil eine Spannung anliegt und das elektrische Bauelement demgemäß diese Spannung abgreift, wird die erste drahtlose Signaleinheit das Warnsignal aussenden. Demgemäß kann allein aus dem Empfang des Warnsignals durch die zweite drahtlose Signaleinheit geschlussfolgert werden, dass eine Spannung an dem aktiven Teil anliegt.

Alternativ oder zusätzlich kann das Warnsignal eine Information darüber enthalten, ob das elektrische Bauelement eine Spannung von dem aktiven Teil abgreift und ggf. wie hoch diese Spannung ist. Dann kann die erste drahtlose Signaleinheit auch eine alternative Energieversorgung zu der mittels dem elektrischen Bauelement aufweisen.

Es kann weiterhin vorgesehen sein, dass die erste drahtlose Signaleinheit das Umfeld in Abhängigkeit von der Reichweite des ersten Signals um sich herum aufbaut. Mit anderen Worten wird das Umfeld durch die Reichweite des ersten Signals bestimmt bzw. entsprechend aufgespannt.

Zur Befestigung des Spannungswarners an dem elektrischen Anlagenteil kann insbesondere vorgesehen sein, dass der Spannungswarner auf den aktiven Teil geklebt wird. Der Spannungswarner kann entsprechende Klebstellen mit Klebstoff aufweisen. Der Klebstoff kann elektrisch leitfähig sein.

Mittels des Klebstoffs kann so ein elektrischer Kontakt zwischen dem elektrischen Bauelement und dem aktiven Teil hergestellt werden. Diese Art der Befestigung ist besonders einfach und kostengünstig. Sie erlaubt eine ökonomisch günstige Ausrüstung einer Vielzahl von aktiven Teilen bzw. elektrischen Anlagenteile einer elektrischen Anlage mit Spannungswarnern.

insbesondere kann vorgesehen sein, dass das elektrische Bauelement dazu eingerichtet ist, die Spannung kapazitiv von dem aktiven Teil abzugreifen. Das elektrische Bauelement kann entsprechend als ein Kondensator ausgebildet sein.

Alternativ kann zwar auch auf andere Weise eine Spannung abgegriffen werden, so kann beispielsweise das elektrische Bauelement auch als eine Batterie ausgebildet sein. Demgegenüber hat die Ausführungsweise mit kapazitivem Spannungsabgriff bzw. als Kondensator jedoch den Vorteil einer praktischen Verschleißfreiheit und hohen technischen Robustheit. Ferner ist das elektrische Bauelement so besonders einfach herstellbar und bedarf keines Austausches nach einer gewissen Lebensdauer, sondern ist praktisch unbegrenzt nutzbar.

Ferner kann vorgesehen sein, dass das elektrische Bauelement und die erste drahtlose Signaleinheit derart miteinander verbunden sind, dass eine Reichweite des Warnsignals von der Höhe der von dem elektrischen Bauelement abgegriffenen Spannung abhängig ist. Dies kann bei einem kapazitiven Spannungsabgriff besonders einfach realisiert werden.

Dadurch lässt sich realisieren, dass die Reichweite des Warnsignals entsprechend der von dem elektrischen Anlagenteil oder der elektrischen Anlage ausgehenden Gefahr für den Facharbeiter, die mit der Höhe der Spannung steigt, eingestellt wird. Schließlich hängen auch die vorgeschriebenen Schutzabstände von der Höhe der Spannung ab.

Dabei kann vorgesehen sein, dass die Reichweite des Warnsignals zumindest einen Schutzabstand, der gemäß Tabelle 102 der DIN-Norm VDE 0105-100:2015-10 in Abhängigkeit von der Höhe der abgegriffenen Spannung bestimmt wird, und höchstens die Summe aus dem Schutzabstand und einem maximalen Zusatzabstand von zumindest 0,5 m und höchstens 5 m beträgt. Der maximale Zusatzabstand kann insbesondere zumindest 0,5 m und höchstens 3 m, ferner insbesondere zumindest 0,75 m und höchstens 2 m betragen. Bei einer Spannung in Höhe von 10 kV beträgt der Schutzabstand gemäß Tabelle 102 gemäß VDE 0105-100 beispielsweise 1,5 m.

Der Zusatzabstand kann auch als ein Ergonomieabstand bzw. Ergonomiezuschlag auf den Schutzabstand bezeichnet bzw. aufgefasst werden. Der Zusatzabstand kann aus ergonomischen Gründen beispielsweise 1 m betragen, um dem Facharbeiter den notwendigen Raum zur Durchführung seiner Arbeiten zu ermöglichen. Ein zu kleiner Zusatzabstand unter beispielsweise 0,5 m bedingt eine schlechte Ergonomie für die Arbeiten an der elektrischen Anlage und ein Risiko keines Empfangs des Warnsignals. Ein zu großer Zusatzabstand sorgt bei nah aneinander befindlichen elektrischen Anlagenteilen einer elektrischen Anlage zu einem übermäßigen Empfangen und Warnen der zweiten drahtlosen Signaleinheit bzw. des im später beschriebenen Empfangsgeräts.

Außerdem kann vorgesehen sein, dass die erste drahtlose Signaleinheit ferner derart eingerichtet ist, dass das Warnsignal zumindest eine Identifikationsinformation zur Identifikation des elektrischen Anlagenteils oder des aktiven Teils enthält, eine Überprüfungsinformation über eine Sicherheitsselbstüberprüfung des elektrischen Anlagenteils enthält, und/oder eine Spannungsfreiinformation über die letzte Spannungsfreiheit des elektrischen Anlagenteils oder des aktiven Teils enthält.

Anhand der Identifikationsinformation kann überprüft werden, ob der Spannungswarner, von dessen erster drahtloser Signaleinheit das Warnsignal empfangen wurde, tatsächlich an dem elektrischen Anlagenteil oder dem aktiven Teil angebracht ist, an dem die Arbeiten von dem Facharbeiter durchgeführt werden sollen. Die Identifikationsinformation kann beispielsweise eine Nummer, einen Namen oder eine sonstige Bezeichnung der Anlage beinhalten. Auch oder alternativ kann ein Standort des elektrischen Anlagenteils oder des aktiven Teils in der Identifikationsinformation enthalten sein.

Anhand der Überprüfungsinformation kann die Sicherheitsselbstüberprüfung des elektrischen Anlagenteils geprüft werden. Die Sicherheitsselbstüberprüfung kann beispielsweise einen Defekt des elektrischen Anlagenteils aufdecken. Dies kann sowohl für die vorgesehenen Arbeiten des Facharbeiters als auch für die Sicherheit des Facharbeiters von hoher Relevanz sein. Der Spannungswarner kann dabei dazu eingerichtet sein, Informationen über eine Sicherheitsselbstüberprüfung von dem elektrischen Anlagenteil oder dem aktiven Teil zu beziehen.

Anhand der Spannungsfreiinformation über die letzte Spannungsfreiheit kann der Facharbeiter nachvollziehen, wann die letzte Spannungsfreiheit gewesen ist und damit etwa prüfen, ob eine Spannungsfreischaltung erfolgreich gewesen ist oder nicht.

Im Übrigen kann vorgesehen sein, dass die erste drahtlose Signaleinheit als ein aktiver RFID-Transponder ausgebildet ist oder einen aktiven RFID-Transponder aufweist, der elektrisch mit dem elektrischen Bauelement verbunden ist und dazu eingerichtet ist, das Warnsignal in das Umfeld auszusenden. Insbesondere kann die erste drahtlose Signaleinheit bzw. der aktive RFID-Transponder mit Energie von dem elektrischen Bauelement versorgt werden. Insbesondere kann ferner eine Nahfeldkommunikation zwischen dem aktiven RFID-Transponder und dem zweiten drahtlosen Kommunikationsgerät genutzt werden.

Ein aktiver RFID-Transponder weist gegenüber einem passiven RFID-Transponder einen integrierten Sender auf. Ein solcher aktiver RFID-Transponder kann einen integrierten Schaltkreis, eine Antenne und den integrierten Sender aufweisen. Der aktive RFID-Transponder kann mit Energie aus dem elektrischen Bauelement versorgt werden.

Auch alternative Funktechnologien nach beispielsweise einem Bluetooth-Standard, Ultrabreitbandstandard oder WLAN-Standard können zwar Verwendung finden. Gegenüber solchen hat die Kommunikation mittels RFID-Transponder bzw. eine Nahfeldkommunikation jedoch den Vorteil, dass diese besonders kostengünstig implementiert werden und besonders energiesparsam arbeiten kann.

Ferner kann vorgesehen sein, dass der Spannungswarner oder die erste drahtlose Signaleinheit ferner dazu eingerichtet ist, ein Entwarnsignal in das Umfeld auszusenden oder an die zweite drahtlose Signaleinheit zu übermitteln, wenn die erste drahtlose Signaleinheit ein Kontrollsignal von der zweiten drahtlosen Signaleinheit empfängt. Das Entwarnsignal kann auf das Kontrollsignal hin die Anwesenheit bzw. Funktionsfähigkeit der ersten drahtlosen Signaleinheit sowie die Spannungsfreiheit des elektrischen Bauelements bestätigen. Das Entwarnsignal kann auch die weiteren bereits genannten Informationen, wie Identifikationsinformation, Überprüfungsinformation und/oder Spannungsfreiinformation, enthalten.

Dies hat den Vorteil, dass ein Defekt des Spannungswarners ausgeschlossen werden kann, da der Spannungswarner in jedem Falle ein Entwarnsignal aussendet, wenn es kein Warnsignal sendet. Erst das Entwarnsignal mit der entsprechenden Identifikationsinformation kann dann dem Facharbeiter die Spannungsfreiheit signalisieren und das sichere Arbeiten an dem elektrischen Anlagenteil gewähren. Ferner können die weiteren Informationen auch dann übertragen werden, wenn der aktive Teil spannungsfrei ist, was der Normalfall sein sollte, da üblicherweise davon auszugehen ist, dass die elektrischen Anlagenteile und elektrische Anlagen erfolgreich spannungsfrei geschaltet werden und nicht verwechselt werden und es nur ausnahmsweise zu Fehlern kommt.

Hierbei kann vorgesehen sein, dass der Spannungswarner einen passiven oder halbpassiven RFID-Transponder zum Empfangen des Kontrollsignals und/oder zum Aussenden des Entwarnsignals aufweist. Der passive RFID-Transponder weist einen integrierten Schaltkreis und eine Antenne auf. Gegenüber einem passiven RFID-Transponder weist der halbpassive RFID-Transponder auch eine Batterie auf.

Mittels des passiven oder halbpassiven RFID-Transponders wird folglich das Aussenden des Entwarnsignals ohne Energiezufuhr durch das elektrische Bauelement ermöglicht. Alternativ kann zwar auch ein Akkumulator in dem Spannungswarner angeordnet werden, der den passiven oder halbpassiven RFID-Transponder oder die erste drahtlose Signaleinheit mit Energie versorgt, dann wird der Spannungswarner aber kostenintensiver in seiner Herstellung und seine Lebensdauer reduziert. Die Energieübertragung an den passiven oder halbpassiven RFID-Transponder erfolgt dabei von einem entsprechenden Lesegerät mittels etwa Induktion.

Gemäß einem zweiten Aspekt der Erfindung wird die eingangs erwähnte Aufgabe gelöst durch ein Spannungswarnsystem zum Warnen eines Facharbeiters vor einer Spannung, die an einem elektrischen Anlagenteil einer elektrischen Anlage oder an einer elektrischen Anlage anliegt, wobei das Spannungswarnsystem zumindest einen Spannungswarner gemäß dem ersten Aspekt der Erfindung aufweist, und wobei das Spannungswarnsystem ferner aufweist: ein Empfangsgerät mit der zweiten drahtlosen Signaleinheit und zumindest einer Warneinheit, wobei die Warneinheit dazu eingerichtet ist, eine Warnung an den Facharbeiter auszugeben, wenn die zweite drahtlose Signaleinheit das Warnsignal empfängt, oder ein Computerprogrammprodukt, das auf einer Rechnereinheit eines Empfangsgeräts ausführbar ist, wobei das Empfangsgerät die zweite drahtlose Signaleinheit und eine Warneinheit aufweist, die beide mit der Rechnereinheit verbunden sind, wobei das Computerprogrammprodukt dazu eingerichtet ist, die Warneinheit zum Ausgeben einer Warnung an den Facharbeiter zu veranlassen, wenn die zweite drahtlose Signaleinheit das Warnsignal empfängt.

Wenn sich das Empfangsgerät in dem Umfeld des zumindest einen Spannungswarners oder eines von mehreren Spannungswarnern befindet, das von der Reichweite des Warnsignals aufgespannt wird, dann empfängt es bzw. seine zweite drahtlose Signaleinheit das Warnsignal und die Warneinheit gibt als Reaktion die Warnung an den Facharbeiter aus. Denn der Empfang des Warnsignals bedeutet, dass eine Spannung an dem elektrischen Bauelement, das mit dem aktiven Teil der elektrischen Anlage in Verbindung steht, anliegt und die elektrische Anlage somit nicht spannungsfrei ist.

Die ausgegebene Warnung dient dem Warnen des Facharbeiters vor einer Spannung, die an einer in der Nähe des Facharbeiters befindlichen elektrischen Anlage anliegt. Die Warnung kann beispielsweise akustisch, optisch und/oder haptisch erfolgen. Die Warneinheit kann beispielsweise einen Lautsprecher, einen Bildschirm oder dergleichen aufweisen oder als ein solcher ausgebildet sein.

Das Empfangsgerät kann einen Bildschirm zur Anzeige der in dem Warnsignal oder dem Entwarnsignal enthaltenen Informationen, wie etwa Identifikationsinformation, Überprüfungsinformation und/oder Spannungsfreiinformation, aufweisen. Alternativ oder zusätzlich kann das Empfangsgerät mit einem Anzeigegerät, etwa einer Datenbrille, gekoppelt oder koppelbar sein und dort die Informationen anzeigen.

insbesondere kann das Spannungswarnsystem eine Vielzahl von Spannungswarnern, das heißt zumindest fünf, insbesondere mehr als 20 oder 100, aufweisen.

insbesondere kann vorgesehen sein, dass das Empfangsgerät als ein am Körper des Facharbeiters tragbares oder mitführbares Empfangsgerät ausgebildet ist. Beispielsweise kann es als ein kompaktes Handheld-Device oder eine Smartwatch ausgebildet sein. Auch kann es ein Tablet oder ein Smartphone sein.

Es kann sich bei dem Smartphone, Tablet oder der Smartwatch um ein handelsübliches Gerät des Facharbeiters oder um ein von dem Energieversorger bereitgestelltes und nur für das Spannungswarnsystem vorgesehenes Gerät handeln. Das Computerprogrammprodukt kann auf einem handelsüblichen Gerät installiert werden, um das Spannungswarnsystem mit einem handelsüblichen Smartphone, Tablet oder einer handelsüblichen Smartwatch bereitzustellen. In diesem Falle kann die Warneinheit beispielsweise eine Vibrationseinheit, ein Lautsprecher, ein Bildschirm oder dergleichen des Smartphones, Tablets oder der Smartwatch sein.

Das Empfangsgerät kann mit einem Umhängeband zum Tragen um den Hals, mit einem Clip zur Befestigung an einem Gürtel oder an einer Hemdtasche oder ähnlich ausgestattet sein. Vorzugsweise ist das Empfangsgerät kompakt und handlich ausgeführt, sodass es ohne Umstände getragen und deshalb auch mitgetragen bzw. mitgeführt wird.

Das Empfangsgerät kann zwar auch beispielsweise an dem elektrischen Anlagenteil selbst, beispielsweise einem Anlagenteilgehäuse oder einer Anlagentür des elektrischen Anlagenteils befestigt werden. Dies würde jedoch erfordern, dass jedes elektrische Anlagenteil ein Empfangsgerät aufweist. Es ist jedoch deutlich kostengünstiger, wenn nur der Facharbeiter mit einem tragbaren oder mitführbaren Empfangsgerät ausgestattet wird.

So kann das Empfangsgerät Teil der persönlichen Schutzausrüstung des Facharbeiters sein. Darüber hinaus hat dies den Vorteil, dass es weniger wahrscheinlich ist, dass der Facharbeiter eine Warnung infolge eines Warnsignals übersieht, wenn er das Empfangsgerät am Körper selbst trägt und es beispielsweise einen Ton von sich gibt, eine Anzeige des Empfangsgeräts aufleuchtet oder es vibriert.

Ferner kann vorgesehen sein, dass die zweite drahtlose Signaleinheit als ein RFID-Lesegerät ausgebildet ist. Entsprechend kann die erste drahtlose Signaleinheit als zumindest ein korrespondierender RFID-Transponder ausgebildet sein oder zumindest einen solchen aufweisen.

Außerdem kann vorgesehen sein, dass das Empfangsgerät einen Datenspeicher aufweist, der dazu eingerichtet ist, eine Identifikationsinformation des elektrischen Anlagenteils, der elektrischen Anlage oder des aktiven Teils zu speichern oder auf dem eine Identifikationsinformation des elektrischen Anlagenteils, der elektrischen Anlage oder des aktiven Teils gespeichert ist, an der oder dem von dem Facharbeiter Arbeiten im Rahmen eines Auftrags durchgeführt werden sollen.

Dementsprechend kann auf einfache Art und Weise sichergestellt werden, dass das Warnsignal und/oder das Entwarnsignal, das von einem Spannungswarner ausgeht, von dem aktiven Teil eines elektrischen Anlagenteils oder einer elektrischen Anlage stammt, an die die Arbeiten im Rahmen des Auftrags durchgeführt werden sollen.

insbesondere kann vorgesehen sein, dass das Empfangsgerät dazu eingerichtet ist, die Identifikationsinformation in dem Datenspeicher mit einer Identifikationsinformation in dem Warnsignal oder Entwarnsignal abzugleichen.

Entsprechend kann das Empfangsgerät bzw. die Warneinheit dazu eingerichtet sein, das Warnsignal nur dann auszugeben, wenn die Identifikationsinformationen zueinander korrespondierenden, insbesondere miteinander übereinstimmen. So kann vermieden werden, dass die Warneinheit des Empfangsgeräts regelmäßig ausschlägt, also eine Warnung ausgibt, wenn es ein Warnsignal eines Spannungswarners empfängt, an dessen elektrischen Anlagenteil keine Arbeiten durchgeführt werden sollen.

Mit anderen Worten kann das Empfangsgerät dazu eingerichtet sein, nur auf das Warnsignal und/oder das Entwarnsignal zu reagieren, dessen darin enthaltene Identifikationsinformation mit der in dem Datenspeicher gespeicherten Identifikationsinformation übereinstimmt. Mit reagiert ist gemeint, dass nur auf ein solches Warnsignal und/oder Entwarnsignal hin die Warneinheit reagiert oder in dem Entwarnsignal enthaltene Informationen ausgegeben werden, beispielsweise auf einer Anzeige des Empfangsgeräts angezeigt werden.

Gemäß einem dritten Aspekt der Erfindung wird die eingangs erwähnte Aufgabe gelöst durch eine elektrische Anlage mit zumindest einem elektrischen Anlagenteil, das zumindest einen aktiven Teil aufweist, und einem Spannungswarnsystem gemäß dem zweiten Aspekt der Erfindung, wobei je ein Spannungswarner des Spannungswarnsystems mit je einer von drei Phasen des zumindest einen aktiven Teils elektrisch verbunden ist.

Dadurch kann jede Phase in einem Dreiphasennetz aktiv auf Spannungsfreiheit hin geprüft werden. Dazu sind je drei Spannungswarner an einem aktiven Teil notwendig.

Zusätzlich oder alternativ zu dem elektrischen Verbinden je eines Spannungswarners des Spannungswarnsystems mit je einer von drei Phasen des zumindest einen aktiven Teils, wird die eingangs erwähnte Aufgabe gemäß dem dritten Aspekt der Erfindung gelöst durch eine elektrische Anlage mit zumindest einem elektrischen Anlagenteil, das zumindest einen aktiven Teil aufweist, und einem Spannungswarnsystem gemäß dem zweiten Aspekt der Erfindung, wobei der zumindest eine elektrische Anlagenteil ein Anlagenteilgehäuse aufweist, innerhalb dessen der zumindest eine Spannungswarner angeordnet ist, und der zumindest eine elektrische Anlagenteil zumindest eine Anlagenteiltür zum Öffnen und Schließen des Anlagenteilgehäuses aufweist, wobei die erste drahtlose Signaleinheit derart eingerichtet ist, dass das Warnsignal nur bei geöffneter Anlagenteiltür das Anlagengehäuse des elektrischen Anlagenteils verlassen kann.

Zusätzlich oder alternativ kann vorgesehen sein, dass auch das Entwarnsignal nur bei geöffneter Anlagenteiltür das Anlagengehäuse des elektrischen Anlagenteils verlassen kann.

Mit anderen Worten ist das Warnsignal und/oder das Entwarnsignal zu schwach, um bei geschlossener Anlagentür aus dem elektrischen Anlagenteil auszutreten bzw. die das Signal isolierende Anlagentür zu durchdringen.

Dadurch wird vermieden, dass das Empfangsgerät bzw. die Warneinheit permanent aufgrund von Warnsignalen von elektrischen Anlagenteilen ausschlägt, an denen nicht gearbeitet werden soll. Ein Abgleich von Identifikationsinformationen ist dann nicht mehr notwendig, kann jedoch zusätzliche Sicherheit darüber verschaffen, ob das elektrische Anlagenteil, dessen Anlagenteiltür geöffnet wurde, tatsächlich das im Rahmen des Auftrags vorgesehene elektrische Anlagenteil ist, und ebenfalls vorgesehen sein.

insbesondere kann die elektrische Anlage eine Vielzahl von elektrischen Anlagenteilen, zumindest fünf, aufweisen. Dabei werden die Vorteile der Ausstattung jeder der elektrischen Anlagenteile mit zumindest einem Spannungswarner, insbesondere je einem Spannungswarner für je eine Phase an dem aktiven Teil jeder der elektrischen Anlagenteile, besonders ausgenutzt, da zwischen der Vielzahl der elektrischen Anlagenteile unterschieden und sicher eine Spannungsfreiheit überprüft werden kann, bevor Arbeiten an dem jeweiligen elektrischen Anlagenteil begonnen werden.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigt:
- Fig. 1: eine schematische Darstellung einer elektrischen Anlage nach einem Ausführungsbeispiel der Erfindung;
- Fig. 2: eine schematische Darstellung eines elektrischen Anlagenteils der elektrischen Anlage aus der Fig. 1;
- Fig. 3: eine schematische Darstellung eines aktiven Teils und Spannungswarners in dem elektrischen Anlagenteil aus der Fig. 2;
- Fig. 4: eine schematische Darstellung eines Spannungswarners aus der Fig. 3;
- Fig. 5: eine Draufsicht auf ein Spannungswarnsystem an dem elektrischen Anlagenteil aus der Fig. 2;
- Fig. 6: eine schematische Darstellung des Spannungswarnsystems aus Fig. 5 beim Aussenden eines Warnsignals;
- Fig. 7: eine schematische Darstellung des Spannungswarnsystems aus Fig. 5 beim Aussenden eines Entwarnsignals;
- Fig. 8: eine schematische Darstellung der Reichweite des Warnsignals aus Fig. 6; und
- Fig. 9: eine schematische Darstellung der in dem Warnsignal aus Fig. 6 und dem Entwarnsignal aus Fig. 7 enthaltenen Informationen.

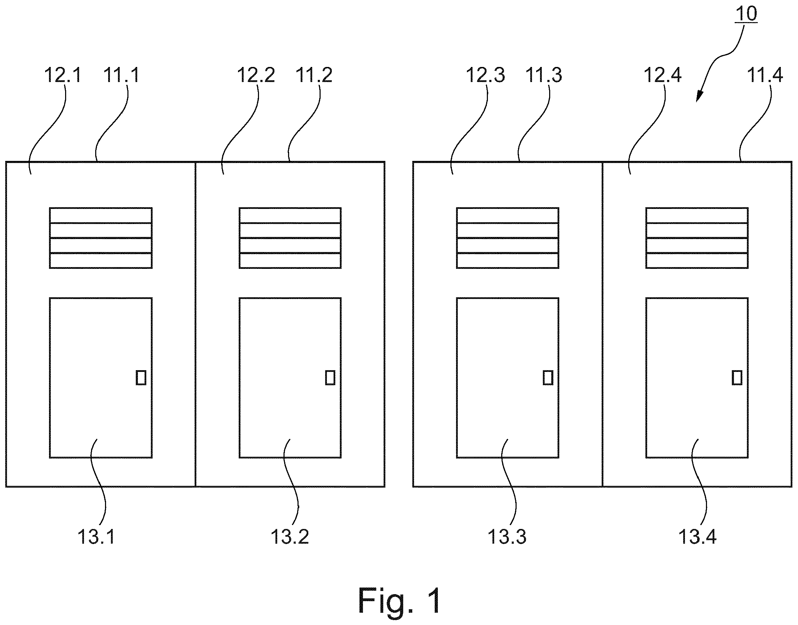

Elemente mit gleicher Funktion und Wirkungsweise sind in den Figuren 1 bis 9 jeweils mit denselben Bezugszeichen versehen. Soweit gleiche Elemente in einer Figur mehrmals gezeigt sind, werden diese mit demselben Bezugszeichen versehen und fortlaufend nummeriert. Die Zahl der fortlaufenden Nummerierung ist von dem Bezugszeichen durch einen Punkt getrennt. Die Anzahl der gleichen Elemente ist jeweils nur beispielhaft gezeigt und für die Erfindung nicht maßgeblich, es sei denn, dass etwas anderes beschrieben ist.

Figur 1 zeigt eine elektrische Anlage 10, die vorliegend beispielhaft vier elektrische Anlagenteile 11.1, 11.2, 11.3, 11.4 aufweist. Die elektrischen Anlagenteile 11.1, 11.2, 11.3, 11.4 sind dabei beispielhaft als Schaltschränke ausgebildet. Jedes der elektrischen Anlagenteile 11.1, 11.2, 11.3, 11.4 weist ein jeweiliges Anlagenteilgehäuse 12.1, 12.2, 12.3, 12.4 sowie eine Anlagenteiltür 13.1, 13.2, 13.3, 13.4 auf.

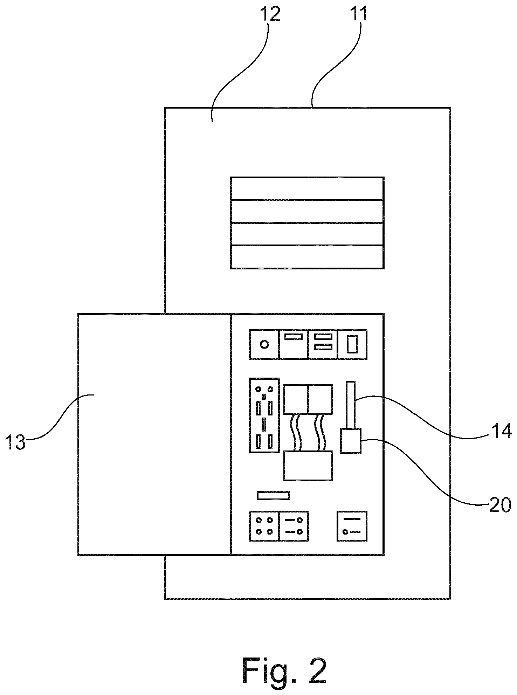

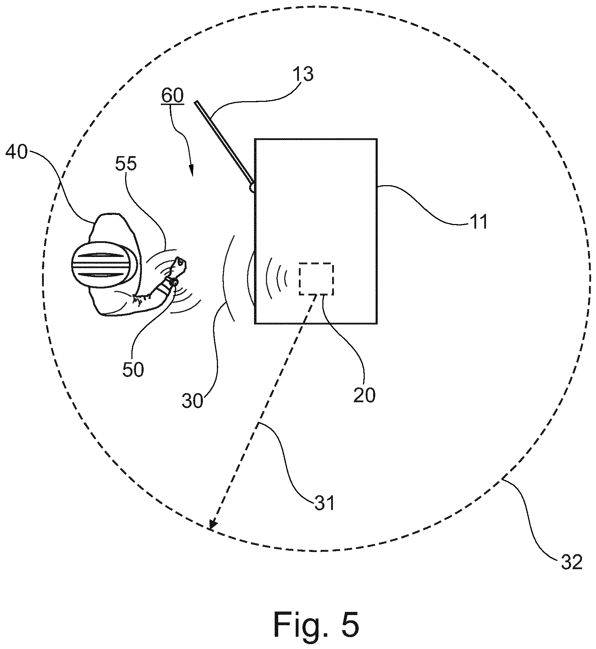

An einer der elektrischen Anlagenteile 11.1, 11.2, 11.3, 11.4 sollen im Folgenden Arbeiten durch einen qualifizierten Facharbeiter 40 (siehe Fig. 5) erfolgen. Hierzu muss das jeweilige elektrische Anlagenteil 11.1, 11.2, 11.3, 11.4 spannungsfrei geschaltet sein. Die Spannungsfreischaltung des in Figur 2 gezeigten elektrischen Anlagenteils 11, das eines der in Figur 1 gezeigten vier elektrischen Anlagenteile 11.1, 11.2, 11.3, 11.4 ist, wurde gemäß den fünf Sicherheitsregeln der eingangs erwähnten Norm durchgeführt.

Figur 2 zeigt eines der elektrischen Anlagenteile 11 der elektrischen Anlage 10 aus Figur 1 mit geöffneter Anlagenteiltür 13, das spannungsfrei geschaltet worden ist und entsprechend auch sein sollte. Die geöffnete Anlagenteiltür 13 öffnet das Anlagenteilgehäuse 12 und ermöglicht einen Blick ins Innere auf die Betriebsmittel des elektrischen Anlagenteils 11.

Das elektrischen Anlagenteil 11 weist einen aktiven Teil 14 auf, der im Betrieb, also wenn der elektrische Anlagenteil 11 nicht spannungsfrei geschaltet ist, eine Spannung führt. An dem aktiven Teil 14 befindet sich zumindest ein Spannungswarner 20.

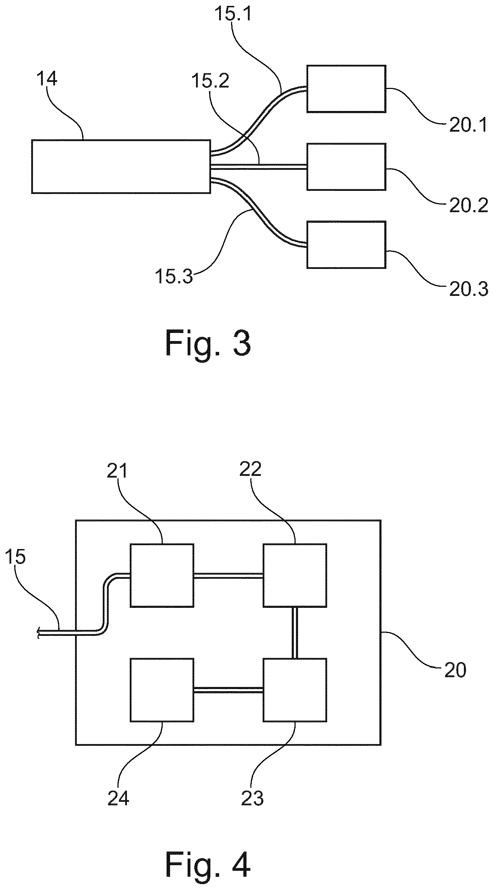

Figur 3 zeigt eine Detailansicht auf den aktiven Teil 14 und offenbart, dass tatsächlich drei Spannungswarner 20.1, 20.2, 20.3 Verwendung finden. Jeder Spannungswarner 20.1, 20.2, 20.3 ist an je einer spannungsführenden Phase 15.1, 15.2, 15.3 des aktiven Teils 14 angeordnet. So kann die Spannungsfreiheit für jede einzelne Phase 15.1, 15.2, 15.3 mittels der Spannungswarner 20.1, 20.2, 20.3 festgestellt werden.

Figur 4 zeigt eine schematische Ansicht des Aufbaus eines der ansonsten baugleichen Spannungswarner 20.1, 20.2, 20.3 aus Figur 3. Der Spannungswarner 20 weist eine elektrisches Bauelement 21 auf, das mit der Phase 15 des aktiven Teils 14 elektrisch verbunden ist. Vorliegend ist das elektrische Bauelement 21 als ein Kondensator ausgebildet und greift die Spannung des aktiven Teils 14 bei an der Phase 15 anliegender Spannung kapazitiv ab.

Das elektrische Bauelement 21 ist mit einer ersten drahtlosen Signaleinheit 22 verbunden. Die erste drahtlose Signaleinheit 22 ist vorliegend als ein aktiver RFID-Transponder ausgebildet, der seine Energie von dem elektrischen Bauelement 21 bezieht. Die erste drahtlose Signaleinheit 22 weist einen Sender zum Senden eines Warnsignals 30 (siehe Fig. 5) auf. Die erste drahtlose Signaleinheit 22 ist folglich nur dann aktiv, wenn das elektrische Bauelement 21 unter Spannung steht, also die Phase 15 eine Spannung liefert und das elektrische Anlagenteil 11 folglich nicht spannungsfrei geschaltet ist.

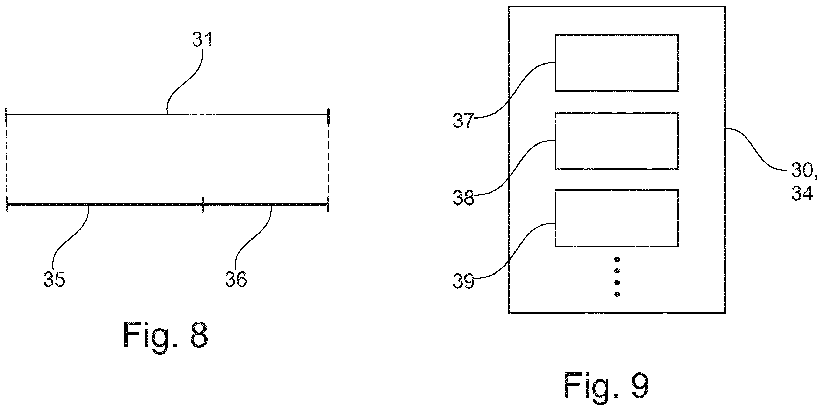

Die erste drahtlose Signaleinheit 22 ist ferner mit einem Datenspeicher 23 verbunden. In dem Datenspeicher 23 werden Informationen gespeichert, die später insbesondere mit Bezug auf Figur 9 erläutert werden.

Ebenso weist der Spannungswarner 20 einen passiven oder halbpassiven RFID-Transponder 24 auf. Der passive oder halbpassive RFID-Transponder 24 ist von der Energieversorgung mittels des elektrischen Bauelements 21 losgelöst. Der passive oder halbpassive RFID-Transponder 24 kann jedoch auf die in dem Datenspeicher 23 gespeicherten Informationen zurückgreifen.

Figur 5 zeigt ein Spannungswarnsystem 60 umfassend den Spannungswarner 20 in dem elektrischen Anlagenteil 11 der elektrischen Anlage 10 aus Figur 1 (andere elektrische Anlagenteile 11 sind der Übersichtlichkeit halber in der Figur 5 weggelassen) und ein Empfangsgerät 50.

Vorliegend hat der Facharbeiter 40 die fünf Sicherheitsregeln befolgend das elektrische Anlagenteil 11 spannungsfrei geschaltet. Ihm kann jedoch ein Versehen unterlaufen sein, beispielsweise kann er die Sicherheitsregeln nicht vollständig befolgt oder das falsche elektrische Anlagenteil 11 spannungsfrei geschaltet haben. In jedem Falle gehen die nachfolgenden beispielhaften Erläuterungen davon aus, dass eine Phase 15 des aktiven Teils 14 im Folgenden nicht spannungsfrei geschaltet ist.

In jedem Falle hat der Facharbeiter 40 die Anlagenteiltür 13 von dem elektrischen Anlagenteil 11 geöffnet, von dem er denkt, dass es sich um das elektrische Anlagenteil 11 handelt, an dem er gemäß seinem Auftrag Wartungs- oder Reparaturarbeiten durchzuführen hat. Der Spannungswarner 20 an der nicht spannungsfrei geschalteten Phase 15 sendet in ein Umfeld 32 mit der Reichweite 31 das Warnsignal 30 aus.

An dem Empfangsgerät 50, das vorliegend beispielhaft als eine Smartwatch ausgebildet ist und an dem Handgelenk des Facharbeiters 40 angeordnet ist, wird das Warnsignal 30 empfangen. Dass das Empfangsgerät 50 von dem Spannungswarner 20 das Warnsignal 30 empfangen kann bedeutet, dass das elektrische Anlagenteil 11 nicht spannungsfrei geschaltet ist.

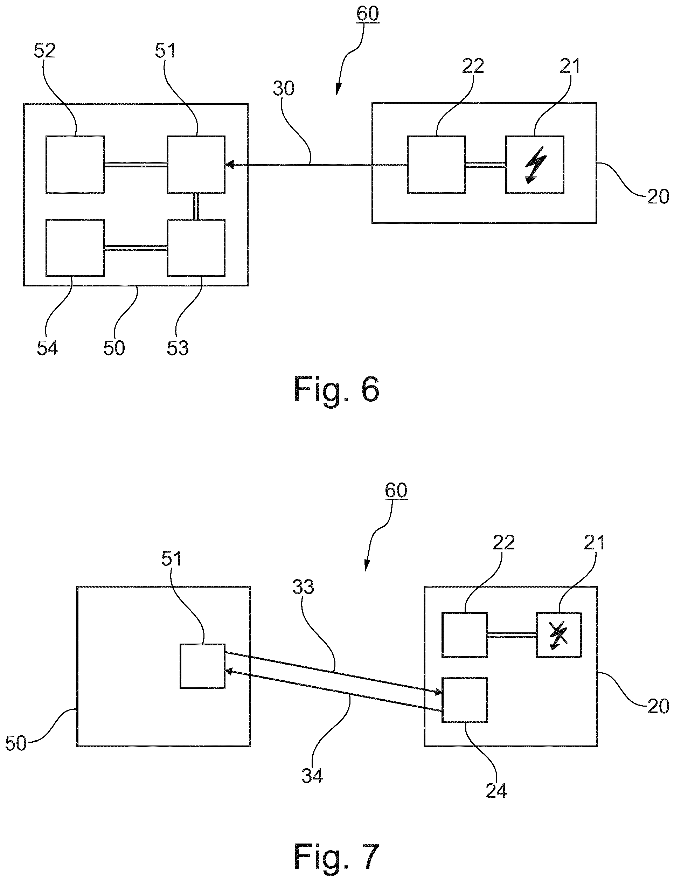

Anhand der Figur 6 wird der Ablauf in dem Spannungswarnsystem 60 näher erläutert, wobei hier auch das Empfangsgerät 50 schematisch in seinem Aufbau gezeigt ist. Das Empfangsgerät 50 verfügt über eine zweite drahtlose Signaleinheit 51. Vorliegend ist die zweite drahtlose Signaleinheit 51 als ein RFID-Lesegerät ausgebildet. Ferner umfasst das Empfangsgerät 50 zumindest eine Warneinheit 52, die vorliegend als eine Vibrationseinheit und ein Bildschirm der Smartwatch ausgebildet ist.

Auch umfasst das Empfangsgerät 50 eine Rechnereinheit 53 und einen Datenspeicher 54, in dem eine Identifikationsinformation 37 (siehe Figur 9) des elektrischen Anlagenteils 11, an dem im Rahmen des Auftrags von dem Facharbeiter 40 Arbeiten durchgeführt werden sollen, gespeichert sind.

Der Spannungswarner 20, der mit der unter Spannung stehenden Phase 15 verbunden ist, ist in Fig. 6 lediglich vereinfacht nur mit dem elektrischen Bauelement 21 und der ersten drahtlosen Signaleinheit 22 gezeigt. Da das elektrische Anlagenteil 11 mit dem Spannungswarner 20 nicht spannungsfrei geschaltet ist, liegt an dem elektrischen Bauelement 21 eine Spannung an. Entsprechend wird die erste drahtlose Signaleinheit 22 mit Energie versorgt und sendet kontinuierlich oder in gewissen Zeitabständen das Warnsignal 30 in das Umfeld 32 aus.

Sobald der Facharbeiter 40 sich mit seinem Empfangsgerät 50 in das Umfeld 32 begibt oder, sofern das Warnsignal 30 bei geschlossener Anlagenteiltür 30 nicht das elektrische Anlagenteil 11 durchdringen kann, der Facharbeiter 40 die Anlagenteiltür 13 öffnet, empfängt das Empfangsgerät 50 das Warnsignal 30.

Der Empfang des Warnsignals 30 an der zweiten drahtlosen Signaleinheit 51 hat eine Aktivierung der Warneinheit 52 zur Folge. Wie Figur 5 erkennen lässt, vibriert das Empfangsgerät 50 an dem Handgelenk des Facharbeiters 40. Diese Warnung 55 in Form der Vibration macht den Facharbeiter 40 darauf aufmerksam, dass zumindest eine Phase des elektrischen Anlagenteils 11, dessen Anlagenteiltür 13 er geöffnet hat, nicht spannungsfrei geschaltet ist. Ferner kann als Warnung 55 auch auf dem Bildschirm des Empfangsgeräts 50 ein entsprechender Hinweis angezeigt werden. Auch Töne können für die Warnung 55 ausgegeben werden.

Der Facharbeiter 40 weiß nun von der Gefahr und kann, bevor er mit den Arbeiten an dem elektrischen Anlagenteil 11 beginnt, prüfen, ob es sich bei dem elektrischen Anlagenteil 11, dessen Anlagenteiltür 13 er geöffnet hat, tatsächlich um das elektrische Anlagenteil 11 handelt, an dem er im Rahmen seines Auftrags Arbeiten durchführen muss. Auch kann er nun noch einmal für die Spannungsfreischaltung dieses elektrischen Anlagenteils 11 sorgen, wenn es sich tatsächlich um das im Rahmen des Auftrags vorgesehen elektrische Anlagenteil 11 sorgen.

insbesondere ist jedoch vorgesehen, dass das Empfangsgerät 50 den Facharbeiter darüber in Kenntnis setzt, ob es sich bei dem elektrischen Anlagenteil 11, dessen Anlagenteiltür 13 er geöffnet hat, tatsächlich um das elektrische Anlagenteil 11 des Auftrags handelt. Dazu wird, wie bereits erwähnt, eine Identifikationsinformation 37 des elektrischen Anlagenteils 11 des Auftrags in dem Datenspeicher 54 des Empfangsgeräts 50 gespeichert.

Das Warnsignal 30 enthält ebenfalls diese Identifikationsinformation 37, die es dem Datenspeicher 23 des Spannungswarners 20 entnimmt. In der Recheneinheit 53 werdend die Identifikationsinformationen 37 des Datenspeichers 54 und des Datenspeichers 23 bzw. Warnsignals 30 miteinander abgeglichen. Bei einer Übereinstimmung der Identifikationsinformationen 37 gibt das Empfangsgerät 50 zusätzlich die Information auf dem Bildschirm aus, dass es sich bei dem elektrischen Anlagenteil 11 tatsächlich um das im Rahmen des Auftrags gespeicherte elektrische Anlagenteil 11 handelt.

Figur 7 zeigt die Aussendung eines Entwarnsignals 34 durch den passiven oder halbpassiven RFID-Transponder 24 in einem der beiden spannungsfreien Spannungswarnern 20, die mit den spannungsfreien Phasen 15 verbunden sind, sodass dessen elektrische Bauelemente 21 spannungsfrei sind, also die damit elektrisch verbundenen Phasen 15 des aktiven Teils 14 spannungsfrei geschaltet sind. In diesem Fall wird die erste drahtlose Signaleinheit 22 nicht mit Energie versorgt und kann kein Warnsignal 30 aussenden. Das Arbeiten an der elektrischen Anlage 11 ist zumindest im Hinblick auf zwei der drei Phasen 15.1, 15.2, 15.3 (siehe Figur 3) daher sicher.

Vorliegend ist der Spannungswarner 20 und auch das Empfangsgerät 50 lediglich der Übersichtlichkeit halber nicht mit allen Komponenten gezeigt.

Damit das Entwarnsignal 34 von dem Empfangsgerät 50 empfangen werden kann, muss die zweite drahtlose Signaleinheit 51 ein Kontrollsignal 33 an den Spannungswarner 20 senden. Das Kontrollsignal 33 kann eine induktive Energieübertragung sein, die den passiven oder halbpassiven RFID-Transponder 24 mit Energie versorgt. Dieser meldet daraufhin mittels des Entwarnsignals 34 seine Funktionsfähigkeit und damit Spannungsfreiheit zurück. Das Entwarnsignal 34 kann eine Information über die spannungsfreie Phase 15 enthalten, damit der Facharbeiter 40 bzw. das Empfangsgerät 50 die nicht spannungsfreie Phase 15 identifizieren kann.

Das Empfangsgerät 50 kann, wenn alle drei Phasen 15.1, 15.2, 15.3 spannungsfrei sind, auf seiner Anzeige die Spannungsfreiheit des elektrischen Anlagenteils 11 bestätigen. Der Facharbeiter 40 kann sich dann sicher an die im Rahmen seines Auftrags vorgesehenen Arbeiten machen. In jedem Falle kann jedoch vorgesehen sein, dass das Empfangsgerät 50 den Facharbeiter 40 zuvor an die Durchführung der Arbeiten zur Spannungsfreiheit, etwa anhand der fünf Sicherheitsregeln, erinnert.

Um nicht unzählige Warnsignale 30 an dem Empfangsgerät 50 von Spannungswarnern 20 verschiedener elektrischer Anlagenteile 11 zu empfangen, kann die Reichweite 31 von der von dem elektrischen Bauelement 21 abgegriffenen Spannung abhängen. Dabei kann die erzielte Reichweite 31 aus einem Schutzabstand 35 und einem Zusatzabstand 36 für ein ergonomisches Arbeiten des Facharbeiters 40 gebildet werden, wie Figur 8 zeigt.

Das Warnsignal 30 und das Entwarnsignal 34 können weitere, für den Facharbeiter 40 relevante Informationen neben der Identifikationsinformation 37 enthalten. So zeigt Figur 9 beispielhaft auch eine Überprüfungsinformation 38 über eine Sicherheitsselbstüberprüfung des elektrischen Anlagenteils 11 enthält und eine Spannungsfreiinformation 39 über die letzte Spannungsfreiheit des aktiven Teils 14 bzw. der jeweiligen Phase 15. Das Warnsignal 30 und das Entwarnsignal 34 können weitere Informationen enthalten.

Das Spannungswarnsystem 60 vermeidet dadurch lebensbedrohliche Situationen infolge menschlicher Fehler und sorgt für zusätzliche Sicherheit durch die Spannungsfreiüberprüfung. Der Facharbeiter 40 erkennt das richtige elektrische Anlagenteil 11 bzw. die richtige Arbeitsstelle. Das Spannungswarnsystem 60 mit den Spannungswarnern 20 ist einfach in elektrischen Anlagen 10 nachrüstbar und praktisch wartungsfrei, da die Energie aus dem elektrischen Feld der elektrischen Anlage 10 gewonnen wird.

### Bezuaszeichenliste

- 10: Elektrische Anlage
- 11: Elektrisches Anlagenteil
- 12: Anlagenteilgehäuse
- 13: Anlagenteiltür
- 14: aktiver Teil
- 15: Phase
- 20: Spannungswarner
- 21: elektrisches Bauelement
- 22: erste drahtlose Signaleinheit
- 23: Datenspeicher
- 24: passiver oder halbpassiver RFID-Transponder
- 30: Warnsignal
- 31: Reichweite
- 32: Umfeld
- 33: Kontrollsignal
- 34: Entwarnsignal
- 35: Schutzabstand
- 36: Zusatzabstand
- 37: Identifikationsinformation
- 38: Überprüfungsinformation
- 39: Spannungsfreiinformation
- 40: Facharbeiter
- 50: Empfangsgerät
- 51: zweite drahtlose Signaleinheit
- 52: Warneinheit
- 53: Rechnereinheit
- 54: Datenspeicher
- 55: Warnung
- 60: Spannungswarnsystem

## Patentansprüche

1. Spannungswarner (20) für ein elektrisches Anlagenteil (11) einer elektrischen Anlage (10) oder eine elektrische Anlage (10) mit:
(a) einem elektrischen Bauelement (21), das dazu eingerichtet ist, elektrisch mit einem aktiven Teil (14) des elektrischen Anlagenteils (11) oder der elektrischen Anlage (10) verbunden zu werden und eine an dem aktiven Teil (14) anliegende Spannung abzugreifen, wobei das aktive Teil (14) ein elektrisch leitfähiges Teil der elektrischen Anlage (10) oder des elektrischen Anlagenteils (11) ist, welches in einem normalen Betrieb der elektrischen Anlage (10) oder des elektrischen Anlagenteils (11) unter Spannung steht, und
(b) einer ersten drahtlosen Signaleinheit (22), die elektrisch mit dem elektrischen Bauelement (21) verbunden und derart eingerichtet ist, dass die erste drahtlose Signaleinheit (22) ein Warnsignal (30) in ein Umfeld (32) um die erste drahtlose Signaleinheit (22) aussendet, wenn das elektrische Bauelement (21) eine Spannung von dem aktiven Teil (14) abgreift, sodass das Warnsignal (30) von einer in dem Umfeld (32) befindlichen zweiten drahtlosen Signaleinheit (51) empfangen werden kann.

2. Spannungswarner (20) nach Anspruch 1, wobei das elektrische Bauelement (21) dazu eingerichtet ist, die Spannung kapazitiv von dem aktiven Teil (14) abzugreifen.

3. Spannungswarner (20) nach Anspruch 1 oder 2, wobei das elektrische Bauelement (21) und die erste drahtlose Signaleinheit (22) derart miteinander verbunden sind, dass eine Reichweite (31) des Warnsignals (30) von der Höhe der von dem elektrischen Bauelement (21) abgegriffenen Spannung abhängig ist.

4. Spannungswarner (20) nach Anspruch 3, wobei die Reichweite (31) des Warnsignals (30) zumindest einen Schutzabstand (35), der gemäß Tabelle 102 der DIN-Norm VDE 0105-100:2015-10 in Abhängigkeit von der Höhe der abgegriffenen Spannung bestimmt wird, und höchstens die Summe aus dem Schutzabstand (35) und einem maximalen Zusatzabstand (36) von zumindest 0,5 m und höchstens 5 m beträgt.

5. Spannungswarner (20) nach einem der voranstehenden Ansprüche, wobei die erste drahtlose Signaleinheit (22) ferner derart eingerichtet ist, dass das Warnsignal (30) zumindest
(a) eine Identifikationsinformation (37) zur Identifikation des elektrischen Anlagenteils (11) oder des aktiven Teils (14) enthält,
(b) eine Überprüfungsinformation (38) über eine Sicherheitsselbstüberprüfung des elektrischen Anlagenteils (11) enthält, und/oder
(c) eine Spannungsfreiinformation (39) über die letzte Spannungsfreiheit des elektrischen Anlagenteils (11) oder des aktiven Teils (14) enthält.

6. Spannungswarner (20) nach einem der voranstehenden Ansprüche, wobei die erste drahtlose Signaleinheit (22) als ein aktiver RFID-Transponder ausgebildet ist oder einen aktiven RFID-Transponder aufweist, der elektrisch mit dem elektrischen Bauelement (21) verbunden ist und dazu eingerichtet ist, das Warnsignal (30) in das Umfeld (32) auszusenden.

7. Spannungswarner (20) nach einem der voranstehenden Ansprüche, wobei der Spannungswarner (20) oder die erste drahtlose Signaleinheit (22) ferner dazu eingerichtet ist, ein Entwarnsignal (34) in das Umfeld (32) auszusenden oder an die zweite drahtlose Signaleinheit (51) zu übermitteln, wenn die erste drahtlose Signaleinheit (22) ein Kontrollsignal (33) von der zweiten drahtlosen Signaleinheit (51) empfängt.

8. Spannungswarner (20) nach Anspruch 7, wobei der Spannungswarner (20) oder die erste drahtlose Signaleinheit (22) einen passiven oder halbpassiven RFID-Transponder (24) zum Empfangen des Kontrollsignals (33) und/oder zum Aussenden des Entwarnsignals (34) aufweist.

9. Spannungswarnsystem (60) zum Warnen eines Facharbeiters (40) vor einer Spannung, die an einem elektrischen Anlagenteil (11) einer elektrischen Anlage (10) oder an einer elektrischen Anlage (10) anliegt, wobei das Spannungswarnsystem (60) zumindest einen Spannungswarner (20) nach einem der voranstehenden Ansprüche aufweist, und wobei das Spannungswarnsystem (60) ferner aufweist:
(a) ein Empfangsgerät (50) mit der zweiten drahtlosen Signaleinheit (51) und zumindest einer Warneinheit (52), wobei die Warneinheit (52) dazu eingerichtet ist, eine Warnung (55) an den Facharbeiter (40) auszugeben, wenn die zweite drahtlose Signaleinheit (51) das Warnsignal (30) empfängt, oder
(b) ein Computerprogrammprodukt, das auf einer Rechnereinheit (53) eines Empfangsgeräts (50) ausführbar ist, wobei das Empfangsgerät (50) die zweite drahtlose Signaleinheit (51) und eine Warneinheit (52) aufweist, die beide mit der Rechnereinheit (53) verbunden sind, wobei das Computerprogrammprodukt dazu eingerichtet ist, die Warneinheit (52) zum Ausgeben einer Warnung (55) an den Facharbeiter (40) zu veranlassen, wenn die zweite drahtlose Signaleinheit (51) das Warnsignal (30) empfängt.

10. Spannungswarnsystem (60) nach Anspruch 9, wobei das Empfangsgerät (50) als ein am Körper des Facharbeiters (40) tragbares oder mitführbares Empfangsgerät (50) ausgebildet ist.

11. Spannungswarnsystem (60) nach einem der Ansprüche 9 oder 10, wobei die zweite drahtlose Signaleinheit (51) als ein RFID-Lesegerät ausgebildet ist.

12. Spannungswarnsystem (60) nach einem der Ansprüche 9 bis 11, wobei das Empfangsgerät (50) einen Datenspeicher (54) aufweist, der dazu eingerichtet ist, eine Identifikationsinformation (37) des elektrischen Anlagenteils (11), der elektrischen Anlage (10) oder des aktiven Teils (14) zu speichern oder auf dem eine Identifikationsinformation (37) des elektrischen Anlagenteils (11), der elektrischen Anlage (10) oder des aktiven Teils (14) gespeichert ist, an der oder dem von dem Facharbeiter (40) Arbeiten im Rahmen eines Auftrags durchgeführt werden sollen.

13. Spannungswarnsystem (60) nach Anspruch 12, wobei das Empfangsgerät (50) dazu eingerichtet ist, die Identifikationsinformation (37) in dem Datenspeicher (54) mit einer Identifikationsinformation (37) in dem Warnsignal (30) oder Entwarnsignal (34) abzugleichen.

14. Elektrische Anlage (10) mit zumindest einem elektrischen Anlagenteil (11), das zumindest einen aktiven Teil (14) aufweist, und einem Spannungswarnsystem (60) nach einem der Ansprüche 9 bis 13, wobei je ein Spannungswarner (20) des Spannungswarnsystems (60) mit je einer von drei Phasen (15) des zumindest einen aktiven Teils (14) elektrisch verbunden ist.

15. Elektrische Anlage (10) mit zumindest einem elektrischen Anlagenteil (11), das zumindest einen aktiven Teil (14) aufweist, und einem Spannungswarnsystem (60) nach einem der Ansprüche 9 bis 13, wobei der zumindest eine elektrische Anlagenteil (11) ein Anlagenteilgehäuse (12) aufweist, innerhalb dessen der zumindest eine Spannungswarner (20) angeordnet ist, und der zumindest eine elektrische Anlagenteil (11) zumindest eine Anlagenteiltür (13) zum Öffnen und Schließen des Anlagenteilgehäuses (12) aufweist, wobei die erste drahtlose Signaleinheit (22) derart eingerichtet ist, dass das Warnsignal (30) nur bei geöffneter Anlagenteiltür (13) das Anlagengehäuse (12) des elektrischen Anlagenteils (11) verlassen kann.

## Claims

1. Voltage warning device (20) for an electrical system part (11) of an electrical system (10) or an electrical system (10) with:
(a) an electrical component (21) which is arranged to be electrically connected to an active part (14) of the electrical system part (11) or of the electrical system (10) and to tap off a voltage applied to the active part (14), the active part (14) being an electrically conductive part of the electrical system (10) or of the electrical system part (11) which is energized during normal operation of the electrical system (10) or of the electrical system part (11), and
(b) a first wireless signal unit (22), which is electrically connected to the electrical component (21) and is arranged such that the first wireless signal unit (22) transmits a warning signal (30) into an environment (32) around the first wireless signal unit (22) when the electrical component (21) taps a voltage from the active part (14), so that the warning signal (30) can be received by a second wireless signal unit (51) located in the environment (32).

2. Voltage warning device (20) according to claim 1, wherein the electrical component (21) is set up to capacitively tap the voltage from the active part (14).

3. Voltage warning device (20) according to claim 1 or 2, wherein the electrical component (21) and the first wireless signal unit (22) are connected to each other in such a way that a range (31) of the warning signal (30) depends on the level of the voltage tapped by the electrical component (21).

4. Voltage warning device (20) according to claim 3, wherein the range (31) of the warning signal (30) is at least one protective distance (35), which is determined according to Table 102 of DIN standard VDE 0105-100:2015-10 as a function of the level of the tapped voltage, and is at most the sum of the protective distance (35) and a maximum additional distance (36) of at least 0.5 m and at most 5 m.

5. Voltage warning device (20) according to one of the preceding claims, wherein the first wireless signal unit (22) is further arranged such that the warning signal (30) at least
(a) comprises identification information (37) for identifying the electrical system part (11) or the active part (14),
(b) contains inspection information (38) about a safety self-inspection of the electrical system part (11), and/or
(c) contains voltage-free information (39) about the last voltage-free state of the electrical system part (11) or the active part (14).

6. Voltage warning device (20) according to one of the preceding claims, wherein the first wireless signal unit (22) is designed as an active RFID transponder or has an active RFID transponder which is electrically connected to the electrical component (21) and is set up to emit the warning signal (30) into the environment (32).

7. Voltage warning device (20) according to any one of the preceding claims, wherein the voltage warning device (20) or the first wireless signal unit (22) is further adapted to emit an unwarning signal (34) into the environment (32) or to transmit it to the second wireless signal unit (51) when the first wireless signal unit (22) receives a control signal (33) from the second wireless signal unit (51).

8. Voltage warning device (20) according to claim 7, wherein the voltage warning device (20) or the first wireless signal unit (22) comprises a passive or semi-passive RFID transponder (24) for receiving the control signal (33) and/or for transmitting the unwarning signal (34).

9. Voltage warning system (60) for warning a skilled worker (40) of a voltage present at an electrical system part (11) of an electrical system (10) or at an electrical system (10), wherein the voltage warning system (60) comprises at least one voltage warning device (20) according to one of the preceding claims, and wherein the voltage warning system (60) further comprises:
(a) a receiving device (50) with the second wireless signal unit (51) and at least one warning unit (52), wherein the warning unit (52) is arranged to issue a warning (55) to the skilled worker (40) when the second wireless signal unit (51) receives the warning signal (30), or
(b) a computer program product executable on a computer unit (53) of a receiving device (50), the receiving device (50) comprising the second wireless signal unit (51) and a warning unit (52) both connected to the computer unit (53), the computer program product being arranged to cause the warning unit (52) to issue a warning (55) to the skilled worker (40) when the second wireless signal unit (51) receives the warning signal (30).

10. Voltage warning system (60) according to claim 9, wherein the receiving device (50) is designed as a receiving device (50) which can be worn or carried on the body of the skilled worker (40).

11. Voltage warning system (60) according to any one of claims 9 or 10, wherein the second wireless signal unit (51) is configured as an RFID reader.

12. Voltage warning system (60) according to any one of claims 9 to 11, wherein the receiving device (50) comprises a data memory (54) which is arranged to store identification information (37) of the electrical system part (11), the electrical system (10) or the active part (14), or on which identification information (37) of the electrical system part (11), the electrical system (10) or the active part (14) on which work is to be carried out by the skilled worker (40) as part of a job is stored.

13. Voltage warning system (60) according to claim 12, wherein the receiving device (50) is set up to match the identification information (37) in the data memory (54) with an identification information (37) in the warning signal (30) or undetection signal (34).

14. Electrical System (10) having at least one electrical system part (11), which has at least one active part (14), and a voltage warning system (60) according to one of claims 9 to 13, wherein a respective voltage warning device (20) of the voltage warning system (60) is electrically connected to a respective one of three phases (15) of the at least one active part (14).

15. Electrical installation (10) having at least one electrical system part (11), which has at least one active part (14), and a voltage warning system (60) according to one of claims 9 to 13, wherein the at least one electrical system part (11) has an system part housing (12), within which the at least one voltage warning device (20) is arranged, and the at least one electrical system part (11) has at least one system part door (13) for opening and closing the system part housing (12), wherein the first wireless signal unit (22) is set up in such a way that the warning signal (30) can only leave the system housing (12) of the electrical system part (11) when the system part door (13) is open.

## Revendications

1. Avertisseur de tension (20) pour une partie d'installation électrique (11) d'une installation électrique (10) ou une installation électrique (10) avec :
(a) un composant électrique (21) qui est adapté pour être connecté électriquement à une partie active (14) de la partie d'installation électrique (11) ou de l'installation électrique (10) et pour prélever une tension appliquée à la partie active (14), la partie active (14) étant une partie électriquement conductrice de l'installation électrique (10) ou de la partie d'installation électrique (11) qui est sous tension pendant un fonctionnement normal de l'installation électrique (10) ou de la partie d'installation électrique (11), et
(b) une première unité de signal sans fil (22) qui est reliée électriquement au composant électrique (21) et qui est agencée de telle sorte que la première unité de signal sans fil (22) envoie un signal d'avertissement (30) dans un environnement (32) autour de la première unité de signal sans fil (22) lorsque le composant électrique (21) prélève une tension de la partie active (14), de sorte que le signal d'avertissement (30) peut être reçu par une deuxième unité de signal sans fil (51) se trouvant dans l'environnement (32).

2. Avertisseur de tension (20) selon la revendication 1, dans lequel le composant électrique (21) est adapté pour prélever la tension de manière capacitive à partir de la partie active (14).

3. Avertisseur de tension (20) selon la revendication 1 ou 2, dans lequel le composant électrique (21) et la première unité de signalisation sans fil (22) sont reliés entre eux de telle sorte qu'une portée (31) du signal d'avertissement (30) dépend de la valeur de la tension prélevée par le composant électrique (21).

4. Avertisseur de tension (20) selon la revendication 3, dans lequel la portée (31) du signal d'avertissement (30) est au moins une distance de protection (35), qui est déterminée selon le tableau 102 de la norme DIN VDE 0105-100:2015-10 en fonction de la hauteur de la tension prélevée, et au maximum la somme de la distance de protection (35) et d'une distance supplémentaire maximale (36) d'au moins 0,5 m et au maximum 5 m.

5. Avertisseur de tension (20) selon l'une des revendications précédentes, dans lequel la première unité de signalisation sans fil (22) est en outre agencée de telle sorte que le signal d'avertissement (30) comprend au moins
(a) une information d'identification (37) pour l'identification de la partie d'installation électrique (11) ou de la partie active (14),
(b) une information de contrôle (38) concernant un auto-contrôle de sécurité de la partie d'installation électrique (11), et/ou
(c) une information d'absence de tension (39) concernant la dernière absence de tension de la partie d'installation électrique (11) ou de la partie active (14).

6. Avertisseur de tension (20) selon l'une des revendications précédentes, dans lequel la première unité de signalisation sans fil (22) est conçue comme un transpondeur RFID actif ou présente un transpondeur RFID actif qui est relié électriquement au composant électrique (21) et est conçu pour émettre le signal d'avertissement (30) dans l'environnement (32).

7. Avertisseur de tension (20) selon l'une quelconque des revendications précédentes, dans lequel l'avertisseur de tension (20) ou la première unité de signalisation sans fil (22) est en outre adapté pour émettre un signal d'alerte (34) dans l'environnement (32) ou pour transmettre un signal d'avertissement à la deuxième unité de signalisation sans fil (51) lorsque la première unité de signalisation sans fil (22) reçoit un signal de contrôle (33) de la deuxième unité de signalisation sans fil (51).

8. Avertisseur de tension (20) selon la revendication 7, dans lequel le avertisseur de tension (20) ou la première unité de signalisation sans fil (22) comprend un transpondeur RFID passif ou semi-passif (24) pour recevoir le signal de contrôle (33) et/ou pour émettre le signal d'alerte (34).

9. Système d'avertissement de tension (60) pour avertir un ouvrier spécialisé (40) d'une tension appliquée à une partie d'installation électrique (11) d'une installation électrique (10) ou à une installation électrique (10), le système d'avertissement de tension (60) comprenant au moins un avertisseur de tension (20) selon l'une des revendications précédentes, et le système d'avertissement de tension (60) comprenant en outre :
(a) un appareil de réception (50) comprenant la deuxième unité de signalisation sans fil (51) et au moins une unité d'avertissement (52), l'unité d'avertissement (52) étant adaptée pour émettre un avertissement (55) à l'ouvrier spécialisé (40) lorsque la deuxième unité de signalisation sans fil (51) reçoit le signal d'avertissement (30), ou
(b) un produit de programme informatique exécutable sur une unité d'ordinateur (53) d'un dispositif de réception (50), le dispositif de réception (50) comprenant la deuxième unité de signalisation sans fil (51) et une unité d'avertissement (52), toutes deux connectées à l'unité d'ordinateur (53), le produit de programme informatique étant adapté pour faire en sorte que l'unité d'avertissement (52) émette un avertissement (55) à l'intention de l'ouvrier qualifié (40) lorsque la deuxième unité de signalisation sans fil (51) reçoit le signal d'avertissement (30).

10. Système d'avertissement de tension (60) selon la revendication 9, dans lequel l'appareil de réception (50) est conçu comme un appareil de réception (50) pouvant être porté ou emporté sur le corps de l'ouvrier spécialisé (40).

11. Système d'avertissement de tension (60) selon l'une des revendications 9 ou 10, dans lequel la deuxième unité de signalisation sans fil (51) est conçue comme un lecteur RFID.

12. Système d'avertissement de tension (60) selon l'une des revendications 9 à 11, dans lequel l'appareil de réception (50) comporte une mémoire de données (54) adaptée pour stocker ou sur laquelle est stockée une information d'identification (37) de la partie d'installation électrique (11), de l'installation électrique (10) ou de la partie active (14) sur laquelle des travaux doivent être effectués par l'ouvrier qualifié (40) dans le cadre d'une mission.

13. Système d'avertissement de tension (60) selon la revendication 12, dans lequel l'appareil de réception (50) est adapté pour faire correspondre l'information d'identification (37) dans la mémoire de données (54) à une information d'identification (37) dans le signal d'avertissement (30) ou le signal d'alerte (34).

14. Installation électrique (10) comprenant au moins une partie d'installation électrique (11) qui présente au moins une partie active (14), et un système d'avertissement de tension (60) selon l'une des revendications 9 à 13, un avertisseur de tension (20) du système d'avertissement de tension (60) étant relié électriquement à une phase respective parmi trois phases (15) de la au moins une partie active (14).

15. Installation électrique (10) comprenant au moins une partie d'installation électrique (11) comportant au moins une partie active (14) et un système d'avertissement de tension (60) selon l'une des revendications 9 à 13, dans laquelle ladite au moins une partie d'installation électrique (11) comprend un boîtier de partie d'installation (12) à l'intérieur duquel est disposé ledit au moins un avertisseur de tension (20), et l'au moins une partie d'installation électrique (11) présente au moins une porte partielle d'installation (13) pour ouvrir et fermer le boîtier de partie d'installation (12), la première unité de signalisation sans fil (22) étant agencée de telle sorte que le signal d'avertissement (30) ne peut quitter le boîtier d'installation (12) de la partie d'installation électrique (11) que lorsque la porte partielle d'installation (13) est ouverte.
